# EUROPEAN PATENT APPLICATION

(11) **EP 4 823 218 A1**
(43) Date of publication of application: **14.10.2026**
(21) Application number: 23960473.9
(22) Date of filing: 05.12.2023
(51) Int. Cl.: H04W 74/08

(54) **METHOD FOR PROCESSING SIGNAL, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: Mewburn Ellis LLP
(86) International application number: PCT/CN2023/136563
(87) International publication number: WO 2025/118159

(57) **Abstract**

The disclosure relates to a method for signal processing, a first device, a second device, a chip, a computer-readable storage medium, a computer program product, a computer program, and a communication system. The method includes the following. A first device receives a first signal, where the first signal contains a first parameter of a second device that sends the first signal. The first device determines a first parameter of a target device for initial access based on the first parameter in the first signal, where the first parameter of the target device is used for the first device to determine whether to respond to a message for triggering initial access received by the first device. In embodiments of the disclosure, the message for triggering initial access is distinguished by determining the first parameter of the target device, such that interference between different second devices during initial access can be solved.

## Description

### TECHNICAL FIELD

This disclosure relates to the field of communication, in particular to a method for signal processing, a first device, a second device, a chip, a computer-readable storage medium, a computer program product, a computer program, and a communication system.

### BACKGROUND

Interference between devices is common in wireless communication systems. To address interference during initial access, random access resources used for accessing different cells are staggered in at least one of a time domain, a frequency domain, or a code domain. However, with the rise of the internet of things (IoT), new challenges have emerged in current wireless communications, requiring support for a lower-capacity device to access a node(s) in a network, thereby making an existing method for inter-cell interference cancellation inapplicable. Therefore, it is necessary to consider how to avoid collisions between different devices in the network.

### SUMMARY

A method for signal processing, a first device, a second device, a chip, a computer-readable storage medium, a computer program product, a computer program, and a communication system are provided in embodiments of the disclosure, which can be used to solve collisions between different devices during initial access.

A method for signal processing is provided in embodiments of the disclosure. The method includes the following. A first device receives a first signal, where the first signal contains a first parameter of a second device that sends the first signal. The first device determines a first parameter of a target device for initial access based on the first parameter in the first signal, where the first parameter of the target device is used for the first device to determine whether to respond to a message for triggering initial access received by the first device.

A method for signal processing is provided in embodiments of the disclosure. The method includes the following. A second device sends a first signal, where the first signal contains a first parameter of the second device, and the first signal is used for a first device to determine a first parameter of a target device for initial access, to determine whether to respond to a message for triggering initial access received by the first device.

A first device is provided in embodiments of the disclosure. The first device includes a first communication module and a first processing module. The first communication module is configured to receive a first signal, where the first signal contains a first parameter of a second device that sends the first signal. The first processing module is configured to determine a first parameter of a target device for initial access based on the first parameter in the first signal, where the first parameter of the target device is used for the first device to determine whether to respond to a message for triggering initial access received by the first device.

A second device is provided in embodiments of the disclosure. The second device includes a second communication module. The second communication module is configured to send a first signal, where the first signal contains a first parameter of the second device, and the first signal is used for a first device to determine a first parameter of a target device for initial access, to determine whether to respond to a message for triggering initial access received by the first device.

A first device is provided in embodiments of the disclosure. The first device includes a transceiver, a processor, and a memory. The memory is configured to store a computer program. The transceiver is configured to communicate with other devices. The processor is configured to invoke and execute the computer program stored in the memory, to cause the first device to perform the method for signal processing.

A second device is provided in embodiments of the disclosure. The second device includes a transceiver, a processor, and a memory. The memory is configured to store a computer program. The transceiver is configured to communicate with other devices. The processor is configured to invoke and execute the computer program stored in the memory, to cause the second device to perform the method for signal processing.

A chip is provided in embodiments of the disclosure. The chip is configured to implement the method for signal processing.

Specifically, the chip includes a processor. The processor is configured to invoke and execute a computer program stored in a memory, to cause a device equipped with the chip to perform the method for signal processing.

A computer-readable storage medium is provided in embodiments of the disclosure. The computer-readable storage medium is configured to store a computer program which, when executed by a device, causes the device to perform the method for signal processing.

A computer program product is provided in embodiments of the disclosure. The computer program product includes computer program instructions that cause a computer to perform the method for signal processing.

A computer program is provided in embodiments of the disclosure. The computer program which, when executed by a computer, causes the computer to perform the method for signal processing.

A communication system is provided in embodiments of the disclosure. The communication system includes a first device and a second device that are configured to implement the access method.

In embodiments of the disclosure, the second device sends the first signal that contains the first parameter used for identifying the second device. The first device receives the first signal, and determines the first parameter of the target device for initial access based on the first parameter contained in the first signal. As such, when receiving the message for triggering initial access, the first device can determine, based on the first parameter, whether to respond the message for triggering initial access, i.e., the message for triggering initial access is distinguished by determining the first parameter of the target device, such that interference between different second devices during initial access can be solved.

### BRIEF DESCRIPTION OF THE DRAWINGS

FIG. 1 is a schematic diagram of a communication system according to embodiments of the disclosure.
FIG. 2A is a schematic flowchart illustrating four-step contention-based random access (CBRA).
FIG. 2B is a schematic flowchart illustrating two-step CBRA.
FIG. 3 is a schematic diagram illustrating a basic composition of an ambient internet of things (A-IoT) communication system.
FIG. 4A is a schematic diagram illustrating a first topology network structure in an A-IoT communication system.
FIG. 4B is a schematic diagram illustrating a second topology network structure in an A-IoT communication system.
FIG. 4C is a schematic diagram illustrating a third topology network structure in an A-IoT communication system.
FIG. 4D is a schematic diagram illustrating a fourth topology network structure in an A-IoT communication system.
FIG. 5A is a structural diagram illustrating a typical broadband receiver.
FIG. 5B is a structural diagram illustrating a typical intermediate frequency (IF) receiver.
FIG. 6 is a schematic diagram illustrating an application scenario according to embodiments of the disclosure.
FIG. 7 is a schematic flowchart of an access method according to an embodiment of the disclosure.
FIG. 8 is a schematic flowchart of an access method according to another embodiment of the disclosure.
FIG. 9 is a schematic diagram illustrating a manner of allocating a first parameter in an application example.
FIG. 10 is a schematic diagram illustrating application example 1 of an access method according to embodiments of the disclosure.
FIG. 11 is a schematic diagram illustrating application example 2 of an access method according to embodiments of the disclosure.
FIG. 12 is a schematic diagram illustrating application example 3 of an access method according to embodiments of the disclosure.
FIG. 13 is a schematic diagram illustrating application example 4 of an access method according to embodiments of the disclosure.
FIG. 14 is a schematic diagram illustrating application example 5 of an access method according to embodiments of the disclosure.
FIG. 15 is a schematic diagram illustrating application example 6 of an access method according to embodiments of the disclosure.
FIG. 16 is a schematic block diagram of a first device according to an embodiment of the disclosure.
FIG. 17 is a schematic block diagram of a second device according to an embodiment of the disclosure.
FIG. 18 is a schematic block diagram of a communication device according to embodiments of the disclosure.
FIG. 19 is a schematic block diagram of a chip according to embodiments of the disclosure.
FIG. 20 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local scope network (WLAN), a wireless fidelity (WiFi), a 5th-generation (5G) communication system, or other communication systems, etc.

Generally speaking, a conventional communication system generally supports a limited number (quantity) of connections and therefore is easy to implement. However, with development of communication technology, a mobile communication system will not only support conventional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Embodiments of the disclosure can also be applied to these communication systems.

In an implementation, the communication system in embodiments of the disclosure may be applied to a carrier aggregation (CA) scenario, or may be applied to a dual connectivity (DC) scenario, or may be applied to a standalone (SA) scenario.

In an implementation, the communication system in embodiments of the disclosure is applicable to an unlicensed spectrum, and the unlicensed spectrum may be regarded as a shared spectrum. Alternatively, the communication system in embodiments of the disclosure is applicable to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, etc.

By way of explanation rather than limitation, in embodiments of the disclosure, the terminal device may also be a wearable device. The wearable device may also be referred to as a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

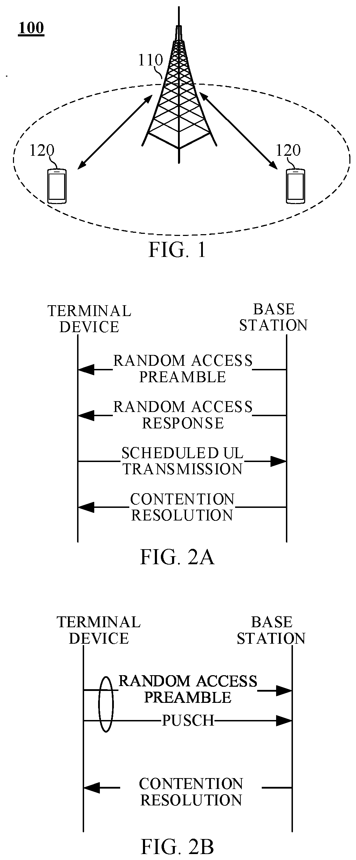

FIG. 1 exemplarily illustrates a communication system 100. The communication system includes one network device 110 and two terminal devices 120. In an implementation, the communication system 100 may include multiple network devices 110, and the coverage of each network device 110 may include other numbers of terminal devices 120, which is not limited in embodiments of the disclosure.

It can be understood that, in embodiments of the disclosure, a device with communication functions in a network/system can be referred to as a "communication device". The communication device may include the network device and the terminal device(s) that have communication functions. The network device and the terminal device(s) can be the devices described above and will not be elaborated again herein. The communication device may further include other devices such as a network controller, a mobility management entity, or other network entities in the communication system, and embodiments of the disclosure are not limited in this regard.

It can be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It can be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association between the two, may mean a relationship of indicating and indicated or configuring and configured, etc.

To facilitate understanding of the technical solutions of embodiments of the disclosure, the related art of embodiments of the disclosure will be described below. The following related art as an optional scheme can be arbitrarily combined with the technical solutions of embodiments of the disclosure, which shall all belong to the protection scope of embodiments of the disclosure.

### (I) Random access

In a 3rd generation partnership project (3GPP) communication system, initial access generally has two types in a medium access control (MAC) layer, i.e., two-step random access (2-step random access channel (RACH)) and four-step random access (4-step RACH). Regardless of which RACH procedure is used, a random access collision is solved within one cell. This is because in a 3GPP cellular communication system (including 4G and 5G), before initiating a random access procedure, a terminal first needs to achieve frequency and time synchronization with its current serving cell, and then initiates the random access procedure on a random access radio resource(s) broadcast by the serving cell. Generally, different serving cells either have different frequencies (e.g., a low-frequency cell responsible for coverage and a highfrequency cell with overlapping coverage with the low-frequency cell), or have asynchronous system times, or both. Even for serving cells with synchronized frequency and time (e.g., different sectors of a same base station), to avoid mutual interference, physical random access channel (PRACH) resources used for random access are staggered in a time domain, a frequency domain, and/or a code domain (a Zadoff-Chu (ZC) code used for generating a preamble). As such, when the terminal initiates random access in a certain coverage cell, even if a transmitted preamble is received by a neighboring cell, a base station can easily identify and discard the preamble from the terminal in the neighboring cell.

The four-step random access procedure was introduced in an LTE system, and is also applicable in an NR system. As mentioned earlier, before initiating an RACH procedure, the terminal first needs to obtain PRACH resource configuration from a system message or dedicated signalling from a network. FIG. 2A is a schematic flowchart illustrating four-step contention-based random access (CBRA). As illustrated in FIG. 2A, the four-step CBRA includes four steps.

Step 1, a terminal sends a random access preamble to a base station. The preamble is referred to as message 1 in an MAC protocol. After sending the preamble, the terminal waits for message 2 fed back by the base station in a subsequent reception window. A start time and an end time of the reception window are set according to a configuration parameter(s). From the perspective of the base station, the base station is able to distinguish preambles received in different time-frequency domains or different preambles in the same time-frequency domain. However, the base station is unable to distinguish the same preamble sent by multiple terminals in the same time-frequency domain, which will result in an access collision.

Step 2, the base station feeds back message 2 to the terminal. Message 2 can be a group-addressed message. In other words, message 2 can contain random access response (RAR) messages for multiple terminals. Addressing information for message 2 is contained in a group-addressed identifier (ID) referred to as a random access-radio network temporary identifier (RA-RNTI), and the RA-RNTI is used for identifying information of a received preamble in a time domain, a frequency domain, and a carrier type. That is, preambles received on the same carrier at the same time and frequency can be combined into the same message 2. An RAR information element (IE) sent to each terminal contains a temporary identifier T_C_RNTI configured for the terminal, a timing advance (for uplink (UL) synchronization), a radio resource grant *UL-grant* for sending message 3, and an index (or a sequence number) of a received preamble (i.e., preamble index). Message 2 may further contain a backoff parameter for alleviating collisions between UL preambles. If the terminal decides to send the preamble again, then the terminal will generate a random time based on the backoff parameter, such that a next preamble transmission time is at least later than the generated random time.

Step 3, after comparing the RA-RNTI and the preamble index in the RAR, the terminal can determine whether the base station has received its transmitted preamble. After confirming that a correct RAR has been received, the terminal sends message 3 based on *UL-grant*, where message 3 at least contains a terminal ID (i.e., a UE ID). Message 3 is addressed by using a T_C_RNTI in a physical layer (PHY). The terminal then starts a timer. During running of the timer, the terminal performs physical downlink control channel (PDCCH) monitoring. If a collision(s) occurs between two or more terminals at Step 1, then the collision(s) will still occur at Step 3 because the terminals send message 3 based on the same information, but IDs of the terminals contained in an MAC control element (MAC CE) in message 3 are different.

Step 4, if the base station correctly decodes message 3, then the base station sends message 4 to the terminal. Message 4 is addressed by using a T_C_RNTI of the received message 3, and an MAC CE in message 4 contains the terminal ID and a newly assigned C-RNTI for the terminal. If multiple terminals send message 3 on the same *UL-grant*, then the base station may be able to succeed in decoding one of them or may fail to decode them (e.g., because mutual interference levels are similar). When the terminal receives message 4, if the terminal finds that a T_C_RNTI scrambled on the PDCCH matches the T_C_RNTI used for sending message 3, then the terminal further checks whether the MAC CE in message 4 sent by the base station matches the terminal ID. Then, only when the terminal IDs are also matched can the terminal confirm that the random access procedure is complete and determine the newly assigned C-RNTI as its identity ID. The identity ID is used as addressing information in subsequent PHY protocols, MAC protocols, and RRC layer protocols.

Logically, in the two-step random access procedure, Step 1 and Step 3 in the four-step random access procedure are combined for the transmission of message A, and Step 2 and Step 4 in the four-step random access procedure are combined for the transmission of message B. FIG. 2B is a schematic flowchart illustrating two-step CBRA. As illustrated in FIG. 2B, the two-step CBRA includes two steps.

Step A, a terminal transmits message A to a base station, where message A contains a random access preamble and a data channel physical uplink shared channel (PUSCH). The PUSCH contains a UE ID of the terminal.

Step B, the base station feeds back message B. There are two manners for addressing the terminal in message B.

B1, if the UE ID in message A is a C-RNTI, then a PDCCH for message B is also scrambled with the C-RNTI. In this case, if the terminal can confirm that the C-RNTI in message B matches the C-RNTI of the terminal, then the terminal considers that the random access procedure is successfully completed, i.e., the collision is solved. The case at B1 is suitable for a terminal in an RRC_CONNECTED state, i.e., a terminal that has completed initial access and established an RRC connection with a network.

B2, if the UE ID in message A is an ID other than the C-RNTI, then the PDCCH for message B is scrambled with an RA-RNTI. B2 is applicable to cases other than B1. If a UE ID contained in *SuccessRAR* in message B matches the UE ID of the terminal, then the terminal considers that its random access procedure is successful and the collision is solved. Otherwise, the terminal either chooses to resend message A or falls back to the 4-step RACH to send message 1.

### (II) Ambient IoT (A-IoT)

The rise of IoT poses new challenges for communication systems. IoT terminals can be used in applications such as logistics, warehousing, factory automation, and animal husbandry. These IoT terminals only need to intermittently perform simple communication with a network or perform rough positioning tracking. In the current market, even the simplest IoT terminals, such as narrowband IoT (NB-IoT) terminals used for coal and electricity metering, require batteries to provide energy. Despite their low energy consumption, the batteries in these terminals will eventually deplete after a few years at most. Consequently, replacing batteries requires significant manpower. In some industrial scenarios, however, it is too dangerous for manual operation. Based on this, battery-free IoT terminals have emerged.

Battery-free IoT terminals are numerous, low-cost, and generally require no manual maintenance after installation. Radio frequency identification (RFID) terminals meet such a demand to some extent. However, the operation of an RFID system itself requires manual participation of a handheld reader. Moreover, due to the limited wireless coverage (within 10 meters) of a single RFID reader, for example, when taking inventory of goods of a large supermarket, it still requires considerable manpower, material resources, and time.

The coverage problem can be effectively solved by migrating a communication system similar to RFID to a 3GPP cellular network because the already deployed cellular networks, such as 4G and 5G, generally have achieved full coverage or at least coverage of major cities. The advantage of full coverage is that the communication or positioning process between IoT terminals and the network does not require human intervention, and thus can operate 24/7 with high efficiency, and can even work efficiently in environments (e.g., wilderness, mines, factories) unsuitable for humans. Thus, apart from initial association of an IoT terminal with a specific item, subsequent data reading/writing and operation/maintenance can be performed conveniently and efficiently through, for example, an application (App) on a smartphone.

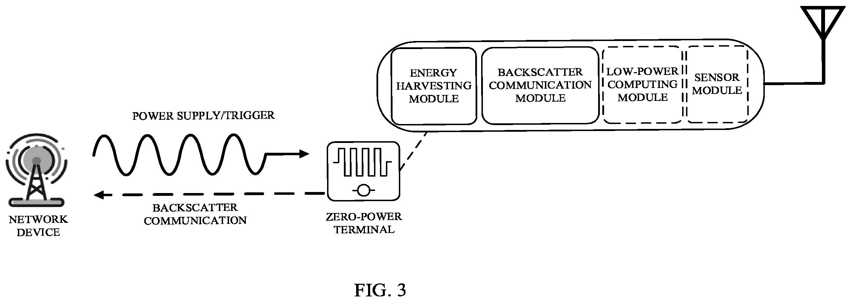

Such a communication system is referred to as an A-IoT communication system or a zero-power communication system. A-IoT communication employs energy harvesting and backscatter communication technologies. An A-IoT communication network is formed by a network device and an A-IoT terminal (may also be referred to as an A-IoT device, a zero-power terminal, or a tag). FIG. 3 illustrates a schematic diagram illustrating a basic composition of an A-IoT communication system. The network device is configured to send a wireless power-supply signal and a downlink (DL) communication signal to the tag and receive a backscattered signal from the tag. A basic tag includes an energy harvesting module, a backscatter communication module, and a low-power computing module. Additionally, the tag may also have a memory or a sensor that is configured to store some basic information (such as object ID, etc.,) or obtain sensor data such as ambient temperature and ambient humidity.

Currently, an A-IoT system is mainly applicable to cases such as inventory, sensors, tracking, and commands. Inventory refers to a process of checking and reconciling inventory discrepancies during inbound and outbound warehouse operations. Common sensors include a temperature sensor, a pressure sensor, a humidity sensor, etc., and are used in applications such as industrial, agricultural, and smart city. Sensing information is uploaded via the A-IoT system to a third-party App for monitoring and management. Tracking generally refers to obtaining an approximate location of an item aperiodically, for example, users can know a real-time location of their packages via a smartphone. Commands refer to operating a certain servo mechanism connected to an A-IoT terminal via the A-IoT communication system. For example, during a break in the office, the users can water plants in their backyard via a mobile app, where a watering servo mechanism is connected to a specific A-IoT terminal.

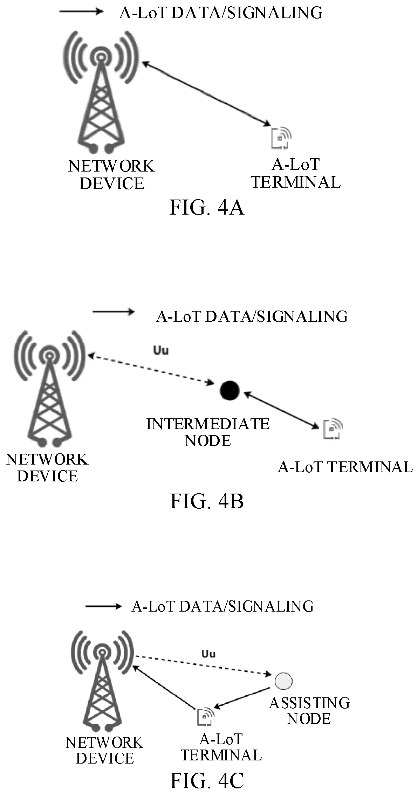

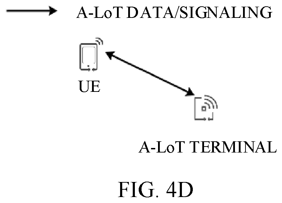

For the above cases, four topology network structures have been proposed in related technologies. FIG. 4A to FIG. 4D illustrate schematic diagrams of four topology network structures. As illustrated in FIG. 4A, an A-IoT terminal can connect to a network device for bidirectional communication. As illustrated in FIG. 4B, an A-IoT terminal can connect to an intermediate node for bidirectional communication, and the intermediate node connects to a network device for bidirectional communication. Optionally, the intermediate node may be a UE that communicates with the network device via a Uu interface. As illustrated in FIG. 4C, an A-IoT terminal can receive power-supply signals/DL communication signals from an assisting node and send UL signals to a network device. Optionally, the assisting node may be a UE that communicates with the network device via a Uu interface. As illustrated in FIG. 4D, an A-IoT terminal can connect to a UE for bidirectional communication.

The energy source for an A-IoT terminal (a tag) comes from surrounding environment, such as radio waves (RF), solar energy, thermal energy, mechanical vibration, wind energy, etc. In the A-IoT system currently studied by the 3GPP, terminals are mainly classified into three types: Type A, Type B, and Type C. Each of a terminal of Type A and a terminal of Type B can perform communication only by reflecting and modulating received radio waves. Such a communication manner is referred to as backscattering. That is, the terminal of Type A and the terminal of Type B cannot actively transmit radio signals, with their power ranging from 1 to 10 microwatts (µW). The terminal of Type A has the lowest transmission power and hardware complexity, close to those of an RFID terminal. The terminal of Type B has slightly more complex hardware, such as signal amplification components and some energy-storage components, such that a communication distance between the terminal of Type B and the network can be farther than that of Type A. A terminal of Type C has the capability to actively send radio waves, with a transmission power around from1 to 10 milliwatts (mW), and can store a certain amount of energy. Terminals of the three types can harvest energy from the environment and can operate continuously for several years or over a decade. To save energy, the terminal of Type A and the terminal of Type B are essentially in a dormant state before the network triggers a communication process. They only wake up and operate after being stimulated by a wireless signal from the network.

A-IoT receivers can be classified into two major types.

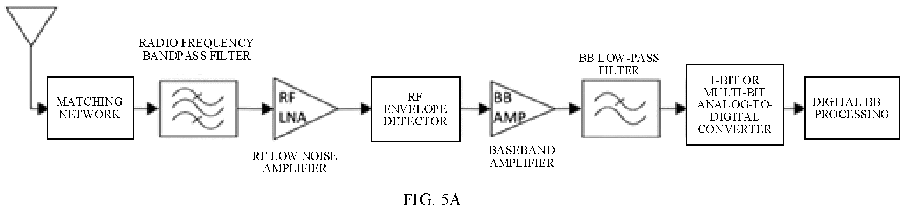

Receiver Type 1: broadband receiver. This type of receiver is also known as a radio frequency (RF) receiver. The RF receiver obtains a target signal to be received within a bandwidth range by using an RF bandpass filter (BPF), and then performs envelope detection and subsequent baseband processing. Such an architecture has the simplest structure and a power consumption as low as a few µW or even lower. However, due to the relatively poor precision of the RF BPF, even when the target signal occupies a narrow bandwidth, the receiver always receives signals within a relatively wide bandwidth. As a result, more noise and interference are introduced during reception, leading to relatively poor receiver performance, or in other words, relatively low sensitivity. FIG. 5A is a structural diagram illustrating a typical broadband receiver.

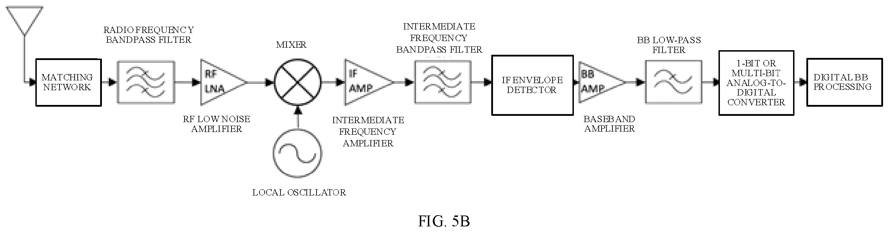

Receiver type 2: narrowband receiver. Typical examples are an intermediate frequency (IF) receiver or a zero-IF receiver. During signal reception, in addition to obtaining a signal to be received within a bandwidth range by using an RF BPF, an RF signal is further down-converted, and a baseband signal is further filtered by using a low-pass filter (LPF) to eliminate noise and interference. As a result, the receiver has a narrow receiving bandwidth and high receiver performance (sensitivity). However, such a receiver requires a local oscillator (LO), and a recommended LO consumes power of 100 µw or even more. Therefore, the power consumption of the receiver is relatively high. Nevertheless, the receiver is still suitable for a zero-power device due to its very low absolute power consumption. FIG. 5B is a structural diagram illustrating a typical IF receiver.

The terminal of type A typically uses a broadband receiver, the terminal of type C typically uses a narrowband receiver, and the terminal of type B may use either one or both types of receivers.

For the A-IoT system and the terminal, a random access procedure in an LTE/NR system is too complex, and requires further simplification and optimization.

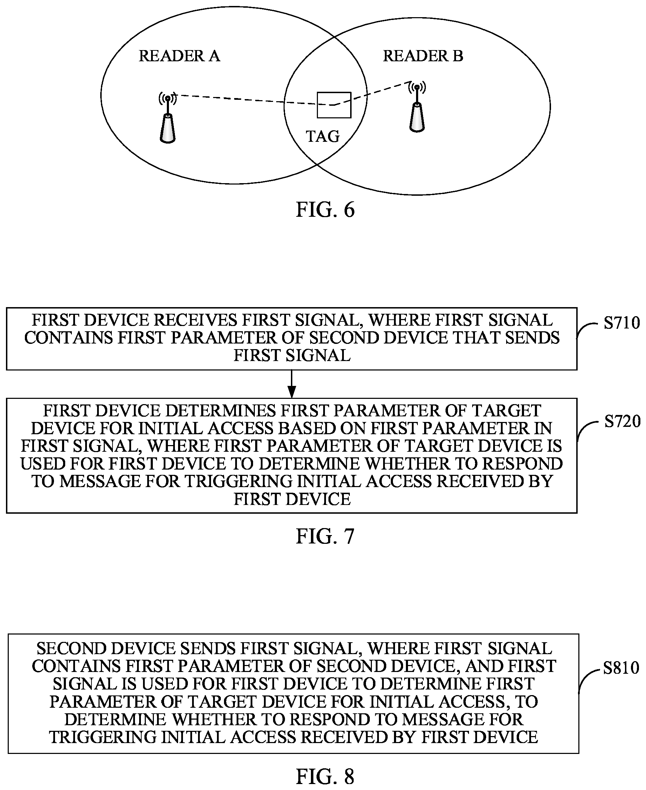

Further, when a reader in the RFID system is in operation, since the coverage of the reader is limited and the reader is often manually operated, it can be essentially assumed that one tag will only communicate with one reader. However, the A-IoT system is a 3GPP wide-coverage system, i.e., the distribution of different readers is essentially similar to the layout of existing base stations. FIG. 6 is a schematic diagram illustrating an application scenario according to embodiments of the disclosure. As illustrated in FIG. 6, a tag may likely fall within the coverage of different readers.

The most typical application scenario of the A-IoT system, i.e., inventory, usually requires a large number of tags to access the system in a short period. To improve frequency reuse, different readers often use the same frequency resource, and similar or identical methods are adopted in channelization. In addition, the number of channels on a carrier is also limited. When a tag responds to a trigger message from a reader and starts to initiate an initial access procedure, a message sent by the tag can easily be received by multiple nearby readers. Similarly, signals sent from different readers can also be easily received by the same tag. This problem generally does not exist in the LTE/NR system because, in a broadband system, even if carriers used by neighboring base stations are the same, a PRACH resource(s) used for initial access can still be easily staggered in time-frequency domain. Even if there is overlap in time-frequency domain, it is still possible to use different generation codes of a preamble, such as different ZC root codes, such that ZC codes generated for the preamble in different cells are orthogonal. Even if collisions occur in such a broadband system like LTE/NR, the broadband system has a sophisticated method for inter-cell interference cancellation to solve the problem. However, for a narrowband system like A-IoT, its simple signal modulation and message interaction make it quite sensitive to inter-cell interference and lack effective means to mitigate or cancel the inter-cell interference.

FIG. 7 is a schematic flowchart of a method for signal processing according to an embodiment of the disclosure. Optionally, the method is applicable to the system as illustrated in FIG. 1, but is not limited thereto. The method includes at least part of the following.

At S710, a first device receives a first signal, where the first signal contains a first parameter of a second device that sends the first signal.

At S720, the first device determines a first parameter of a target device for initial access based on the first parameter in the first signal, where the first parameter of the target device is used for the first device to determine whether to respond to a message for triggering initial access received by the first device.

In embodiments of the disclosure, the first device may be a terminal device. Optionally, the first device may be a terminal in IoT, such as an A-IoT device, a zero-power terminal, or an electronic tag.

In embodiments of the disclosure, the second device may be a node in a system/network. Optionally, the second device may be a node used to communicate with the first device. The node may be a terminal device, a network device, or a node (power-supply node) that solely provides backscattered radio waves. For example, the second device may be the network device (e.g., the base station) as illustrated in FIG. 4A, the intermediate node as illustrated in FIG. 4B, the assisting node as illustrated in FIG. 4C, or the UE as illustrated in FIG. 4D. It can be understood that, the topology network structure is not limited in embodiments of the disclosure, and therefore, the second device is not limited to the above forms and may include any form of node capable of point-to-point communication with the first device.

The access method is applicable in a scenario where the first device may be within the coverage of multiple second devices, such as the scenario as illustrated in FIG. 6, to solve a collision(s) between multiple second devices. Specifically, in the scenario where the first device may be within the coverage of multiple second devices, the first device may receive a message(s) sent by one or more second devices. Since a distance between each second device and the first device may differ, the first device may not correctly receive a message from each second device, or the signal quality of each received message may vary. According to the method, before initial access, the first device determines the first parameter of the target device based on the first parameter in the received first signal. When receiving the message for triggering initial access, the first device can determine, based on the first parameter, whether to respond to the message for triggering initial access. In this way, the first device can only respond to the message for triggering initial access sent by the target device, thereby avoiding interference/collisions between the target device and other second devices.

It can be seen that, in embodiments of the disclosure, the first parameter is introduced to differentiate different second devices, i.e., to identify a specific second device among at least one second device. In some scenarios, the first parameter may be referred to as a reader color code (RCC) parameter. Based on the first parameter, messages for triggering initial access from different second devices can be distinguished, thereby solving collisions between different second devices with relatively low system bandwidth overhead and signalling overhead.

In some embodiments, the operations at S720, i.e., the first device determines the first parameter of the target device for initial access based on the first parameter in the first signal, include the following. The first device determines a first signal with the strongest signal strength among multiple received first signals. The first device determines a first parameter in the first signal with the strongest signal strength as the first parameter of the target device.

Specifically, when the first device receives multiple first signals, the first device can measure the first signals to determine the strength of each signal, select a second device corresponding to the first signal with the strongest signal strength as the target device, and record the first parameter of the target device.

Optionally, when the first device receives only one first signal, the first device can directly determine a first parameter in the first signal as the first parameter of the target device.

A method for signal processing is further provided in embodiments of the disclosure from the perspective of the second device. Specifically, FIG. 8 is a schematic flowchart of a method for signal processing according to another embodiment of the disclosure. The method includes the following.

At S810, a second device sends a first signal, where the first signal contains a first parameter of the second device, and the first signal is used for a first device to determine a first parameter of a target device for initial access, to determine whether to respond to a message for triggering initial access received by the first device.

According to the above method, the first signal sent by the second device contains the first parameter of the second device, such that the first device can use the first signal to determine the first parameter of the target device for initial access, and then perform differentiated processing, based on the first parameter of the target device, on messages for triggering initial access from different second devices. Therefore, by sending the first signal, the second device can help the first device to solve collisions between different second devices during initial access.

In some embodiments, the first parameter is unique in a global scope or a local scope of a communication system.

In an implementation, the first parameter is unique in the global scope of the communication system, i.e., the first parameter of the target device is different from a first parameter of any other second device in the global scope of the communication system. In this way, the target device can be distinguished from other second devices globally, thereby ensuring that the collision can be solved.

In another implementation, the first parameter is unique in the local scope of the communication system, i.e., the first parameter of the target device is different from a first parameter of any other second device in the local scope of the communication system.

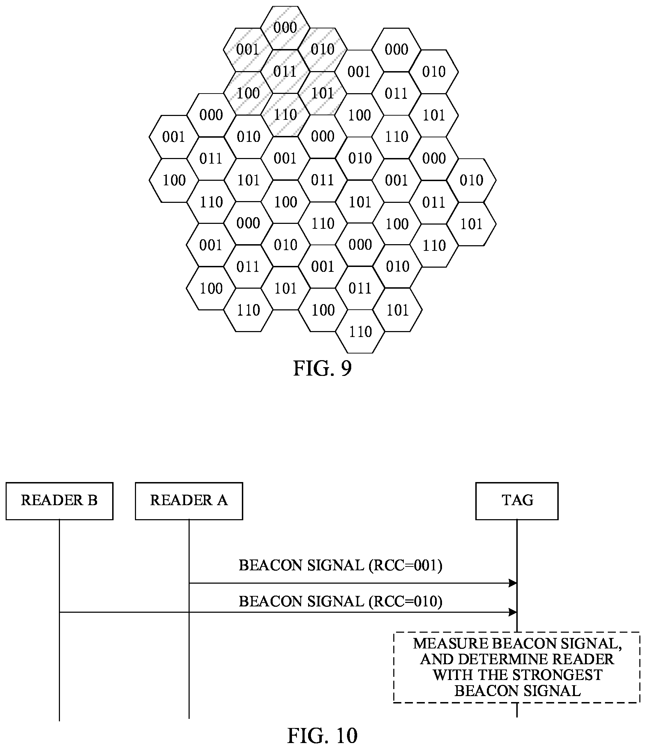

FIG. 9 is a schematic diagram illustrating a manner of allocating a first parameter in an application example, where each hexagon represents the coverage of a second device, and 3-bit information in each hexagon is a first parameter of the second device represented by the hexagon. It can be seen that, among seven second devices centered around any second device, a first parameter of each second device is different from each other, i.e., each second device is unique in a local scope of the seven hexagons. Since interference in a communication system is related to a distance between devices, when a distance between different second devices increases, a collision is less likely to occur. Therefore, a unique first parameter of the second device in the local scope of the communication system allows the target device to be distinguished from other second devices locally, while devices further away are also unlikely to collision with the target device. As such, the collision can also be solved.

In some embodiments, the number of bits of the first parameter is related to the number of second devices in the global scope or the local scope of the communication system.

Specifically, if the first parameter is unique globally, then the number of bits of the first parameter is related to the number of second devices in the global scope. If the first parameter is unique locally, then the number of bits of the first parameter is related to the number of second devices in the local scope.

In some embodiments, when the number of the second devices increases, the number of bits of the first parameter increases or remains unchanged.

In practical applications, the number of the second devices in the local scope varies according to different application scenarios, such that the number of bits or bit length of the first parameter can be set differently in different application scenarios. Taking FIG. 9 as an example, when there are seven second devices in the local scope, a 3-bit first parameter can be used. In practical engineering, some scenarios may be simpler. For example, in an indoor scenario, there may only be a few readers, such that a first parameter of each reader may be 2 bits or even 1 bit. However, in an outdoor scenario, where readers may be densely distributed, a first parameter of each reader may require 4 bits. According to the embodiment mentioned above, the number of bits of the first parameter increases or remains unchanged as the number of the second devices increases, thereby ensuring that each second device is assigned with a locally unique first parameter within an appropriate bit length.

It can be noted that, in embodiments of the disclosure, a message containing the first parameter can specifically mean that the first parameter is encoded in information in a PHY or encoded in a message in Layer 2 (L2), such as encoded in an MAC layer or an RRC layer. Optionally, the first parameter may be standalone in a message or may be encoded together with other parameters.

Two optional implementations for transmitting the first signal are provided below.

### Implementation 1

In this implementation, the first signal includes a beacon signal periodically broadcast by the second device. That is, the second device sends the first signal to the first device as follows. The second device periodically broadcasts a beacon signal.

Optionally, any second device can periodically broadcast beacon signals, and each beacon signal contains a first parameter of the second device, such that the first device within the coverage of the second device can determine the first parameter of the target device for initial access.

Optionally, a broadcast period of the beacon signal is selected from a pre-configured set of periods.

FIG. 10 is a schematic diagram illustrating an application example of a method for signal processing according to embodiments of the disclosure. For example, a first device includes a tag, and second devices near the first device include readers. As illustrated in FIG. 10, the method for signal processing based on a beacon signal includes the following.

Step 1, before triggering the tag to initiate initial access, each reader first periodically broadcasts a beacon signal. The beacon signal at least contains an RCC parameter (a first parameter). Specifically, a beacon signal sent by reader A contains RCC=001, and a beacon signal sent by reader B contains RCC=010.

Optionally, to enable more tags to receive the beacon signal, the beacon signal is generally a broadband signal, e.g., broadcast within a bandwidth of one carrier. Candidates for a broadcast period of the beacon signal may include a limited number of pre-agreed period values.

Step 2, the tag attempts to receive beacon signals from readers and measures the signals. The tag selects a beacon signal with the strongest signal strength as the best reader (a target device) and records an RCC parameter of the reader.

In some embodiments, the first device receives the first signal as follows. The first device searches for beacon signals within a first time window. When the first device finds out multiple beacon signals containing the same first parameter, the first device determines, based on the multiple beacon signals containing the same first parameter, a broadcast period used by a second device corresponding to the same first parameter, and receives a beacon signal from the second device based on the broadcast period.

That is, the reception of the beacon signal by the first device can be divided into two stages. The first stage is a scanning stage, where the first device does not know a transmission time of the beacon signal from the second device, and thus the first device searches for the beacon signal within a certain time window. After the first device finds out multiple beacon signals containing the same first parameter, the first device can determine the broadcast period used by the second device corresponding to the first parameter. As such, the first device can determine the transmission time of the beacon signal based on the broadcast period, and then receive the beacon signal during the transmission, thereby saving energy consumption.

In some embodiments, the broadcast period of the beacon signal is selected from a pre-configured set of periods, and a length of the first time window is greater than a maximum period in the set of periods.

For example, the pre-configured set of periods contains multiple period values, where the maximum period value is 20 ms. The second device can select a period value for broadcasting the beacon signal from the set of periods. The first device searches for beacon signals within a time window greater than or equal to 20 ms, thereby ensuring that the first device can find out two beacon signals consecutively sent by the same second device. As such, the first device can determine the broadcast period used by the second device, and perform subsequent reception based on the broadcast period, thereby saving energy.

### Implementation 2

In this implementation, the first device receives at least one first signal as follows. The first device sends a second signal, where the second signal is used for triggering a second device that receives the second signal to send the first signal. The first device receives the first signal sent by the second device. Correspondingly, the second device sends the first signal to the first device as follows. The second device sends the first signal to the first device upon receiving a second signal sent by the first device.

That is, the transmission of the first signal can be actively triggered by the first device. For example, the first device may include a type C tag that only supports message original (MO) services. In this case, the first signal used for configuring an initial access parameter for the first device can be triggered on demand, to save energy consumption of the second device (e.g., the network device).

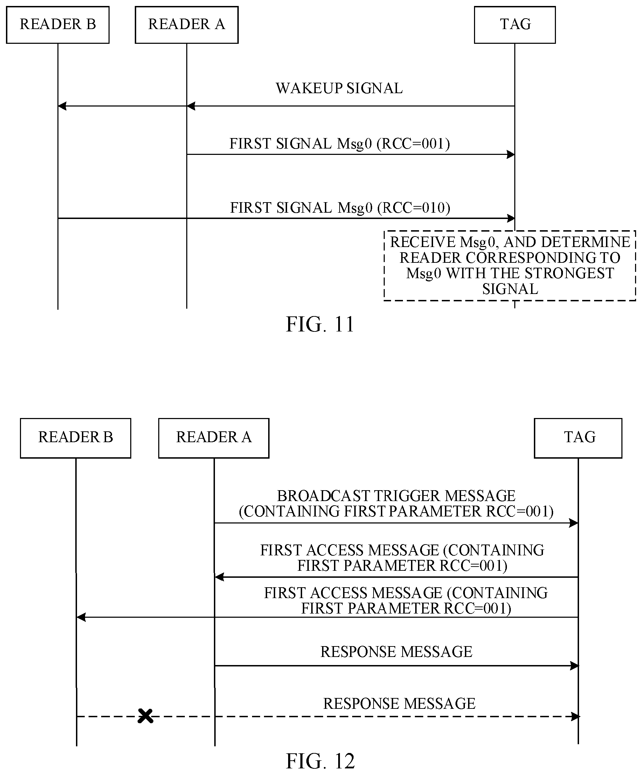

FIG. 11 is a schematic diagram illustrating another application example of a method for signal processing according to embodiments of the disclosure. For example, the method is applicable in an IoT system, where a first device includes a tag, and second devices near the first device include readers. As illustrated in FIG. 11, the method for signal processing based on active triggering by the first device includes the following.

Step 1, when the tag attempts to initiate a call (or originating call), the tag first sends a wake-up signal (equivalent to the second signal) to surrounding readers. If more than one reader receives the wake-up signal, then these readers will respond to the wake-up signal.

Step 2, each of reader A and reader B responds to the wake-up signal by sending message 0 (msg0, equivalent to the first signal).

Step 3, if the two msg0s do not collide with each other, i.e., the tag correctly receives the two msg0s through signal demodulation, then the tag can determine the best reader (the target device) by measuring signal strength of the two msg0s. If the two msg0s collide with each other, then the tag determines the best reader based on a signal demodulation result. In the latter case, only a correctly demodulated reader is the best reader. The tag records an RCC parameter of the correctly demodulated reader.

The implementation of the initial access procedure in embodiments of the disclosure is described below.

In some embodiments, the method for signal processing further includes the following. The second device sends a trigger message, where the trigger message contains the first parameter of the second device, and the trigger message is used for triggering the first device to send a first access message when the first parameter in the trigger message is the same as the first parameter of the target device.

Correspondingly, for the first device, the method for signal processing further includes the following. The first device receives a trigger message, where the trigger message is used for triggering initial access, and the trigger message contains a first parameter of a device that sends the trigger message. The first device sends a first access message when the first parameter in the trigger message is the same as the first parameter of the target device.

That is, initial access can be actively triggered by the second device. Optionally, the second device can broadcast the trigger message, such that when a first device within the coverage of the second device receives the trigger message, the first device can determine, according to the first parameter in the trigger message, whether to send the first message for network access, i.e., the first access message.

Optionally, when the first parameter in the trigger message is different from the first parameter of the target device, the first device ignores or discards the trigger message.

According to the above embodiment, the first device only responds to the trigger message sent by the target device. Since the target device is a second device with the best communication signal to the first device, the signal quality during subsequent initial access procedures can be ensured.

Optionally, the second device can send the trigger message based on requirements of specific application scenarios. In some embodiments, the trigger message may include a message for initiating an inventory, i.e., the second device may send the trigger message to perform an inventory.

In some embodiments, the first access message contains the first parameter of the target device, and the first parameter of the target device indicates that the target device is to send a response message.

Correspondingly, for each second device, the method for signal processing further includes the following. The second device receives the first access message, where the first access message contains the first parameter of the target device. The second device sends a response message to the first device when the first parameter in the first access message is the same as the first parameter of the second device.

That is, the first parameter of the target device is carried in the first access message, such that each second device can determine whether it is the target device, and then determine whether to respond to the first access message sent by the first device, thereby achieving differentiated processing on different second devices.

FIG. 12 is a schematic diagram illustrating an application example of a method for signal processing according to embodiments of the disclosure. For example, the method is applicable in an IoT system, where a first device includes a tag, and second devices near the first device include readers. As illustrated in FIG. 12, the method for signal processing includes the following.

Step 0, for purposes such as inventory, a network broadcasts a message for triggering an inventory (msg0, a trigger message) on a certain frequency band via a certain reader (e.g., reader A). msg0 at least contains an RCC parameter (a first parameter) indicative of the reader.

Step 1, when the tag initiates initial access, the tag first needs to receive msg0 and compare the RCC parameter in msg0 with an RCC parameter of the best reader (a target device) of the tag (assume that an RCC of the best reader is 001 in this application example). If the RCC parameter in msg0 is the same as the RCC parameter of the best reader, then the tag starts to send UL information (a first access message). Otherwise, the tag ignores msg0. The first access message sent by the tag contains the RCC parameter selected by the tag.

Step 2, the first access message is received by both reader A and reader B. For reader A, the message from the tag contains RCC=001, and thus reader A considers that the message is intended for reader A and sends a response message. For reader B, since the RCC contained in the message is different from an RCC of reader B, reader B ignores the message and does not send a response message.

In some embodiments, the first access message further contains a first ID of the first device, and the first access message is used for triggering the target device to send a response message containing the first ID. Correspondingly, for each second device, the response message contains the first ID of the first device, the first ID is obtained based on the first access message, and the response message is used for the first device to determine success of initial access based on the first ID. That is, the method for signal processing further includes the following. The first device receives the response message, and determines the success of initial access when the first ID in the response message is the same as the first ID of the first device.

Optionally, when the first ID in the response message is different from the first ID of the first device, the response message may be intended for a first access message sent by other devices, and the first device can ignore or discard the response message.

It can be understood that, in the initial access procedure, the first ID of the first device is carried in both the first access message sent by the first device and the response message sent by the second device, such that collisions between the first device and other devices can be solved.

In some embodiments, the response message contains a second ID for the first device. Specifically, for the first device, when the response message contains the first ID of the first device, the response message further includes the second ID assigned to the first device by the target device. For the second device, when the received first access message contains the first parameter of the second device, the response message sent by the second device contains the second ID assigned to the first device by the second device. The second ID can be used in subsequent procedures, i.e., the second ID is used for distinguishing the first device from other devices in subsequent procedures.

Optionally, UL message content to be sent by the first device may be carried in or encoded in the first access message. In some scenarios, such as reporting of monitoring/sensing information, inventory, etc., the UL message content to be sent by the first device has already been sent to the second device via the first access message, and there may be no subsequent procedure. In such cases, the response message may not contain the second ID, i.e., the second device does not need to assign the second ID to the first device.

In some embodiments, the second ID in the response message received by the first device is determined at least based on the first parameter of the target device. That is, for any second device, the second ID assigned to the first device in the response message is determined at least based on the first parameter of that second device.

Since the first parameter is encoded in the second ID, second IDs assigned by second devices with different first parameters are different. Therefore, in the above embodiment, the second ID can be unique in a local scope of a communication system, rather than among multiple first devices simultaneously accessing the target device, thereby avoiding an issue in message addressing between the first device and the target device after initial access.

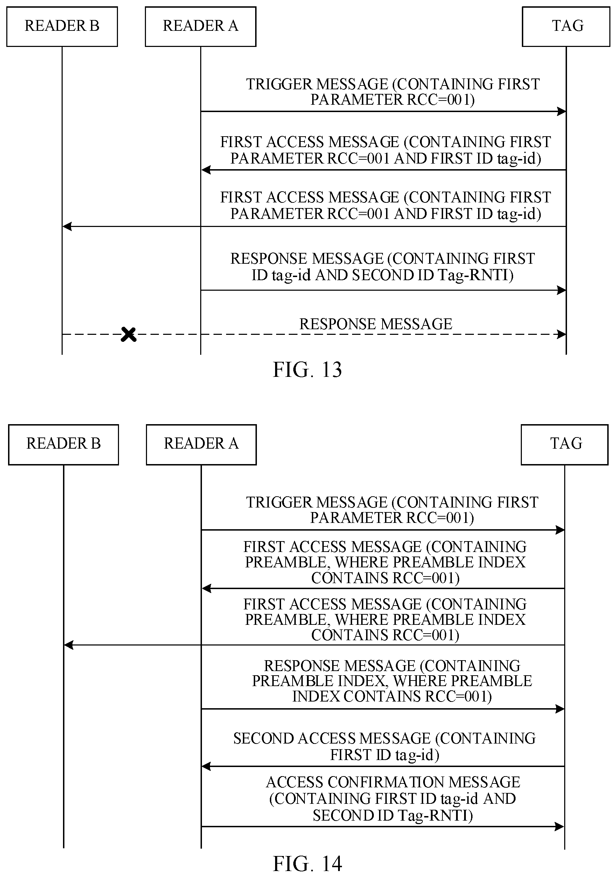

To facilitate a clear understanding of the technical solutions, FIG. 13 illustrates a schematic diagram illustrating another application example of a method for signal processing according to embodiments of the disclosure. For example, the method is applicable in an IoT system, where a first device includes a tag, and second devices near the first device include readers. As illustrated in FIG. 13, the method for signal processing includes the following.

Step 1, after receiving a trigger message, the tag compares an RCC parameter (a first parameter) in the trigger message with an RCC parameter of the best reader (a target device) saved by the tag. When the tag determines that the RRC parameter in the trigger message is the same as the RCC parameter of the best reader, the tag sends a first access message to the readers. The first access message at least contains a first ID of the tag (i.e., tag-id), tag-id can be a random number generated by the tag. The first access message contains RCC=001 in the trigger message.

Step 2, after receiving the first access message from the tag and comparing the RCC, reader A feeds back a response message containing the received first ID tag-id and a second ID Tag-RNTI assigned to the tag. When the tag receives the response message, if the tag finds that the received tag-id is the same as the tag-id sent by the tag, then the tag considers that initial access is successful, and then determines the received Tag-RNTI as an ID of the tag for subsequent procedures. After comparing the RCC, reader B (RCC=010) finds that the RRC is different from an RCC of reader B, and thus simply ignores the received first access message.

In some embodiments, the first access message sent by the first device when the first parameter in the trigger message is the same as the first parameter of the target device may contain a first preamble, at least part of information in a sequence number of the first preamble is determined based on the first parameter of the target device, and the at least part of the information indicates that the target device is to send a response message.

Correspondingly, for the second device, the method for signal processing further includes the following. The second device receives the first access message, where the first access message contains the first preamble. The second device sends a response message to the first device when the at least part of the information in the sequence number of the first preamble matches the first parameter of the second device, where the response message contains the sequence number of the first preamble, to cause the first device to send a second access message.

For the first device, the method for signal processing further includes the following. The first device receives the response message, and sends a second access message when a sequence number of a preamble contained in the response message is the same as the sequence number of the first preamble.

That is, the first parameter of the target device is carried in the sequence number of the first preamble in the first access message, such that each second device can determine whether to send a response message. Moreover, the second device also carries the sequence number of the preamble in the response message, such that the first device can determine whether the response message responds to the first access message sent by the first device. Further, when the sequence number of the preamble is the same as the sequence number of the first preamble, the first device sends the second access message. Optionally, the second access message can be used for sending UL message content.

Based on the above embodiment, the second access message contains a first ID of the first device. The method for signal processing further includes the following. The second device receives the second access message. The second device sends an access confirmation message to the first device, where the access confirmation message contains the first ID, to cause the first device to determine success of initial access.

Correspondingly, for the first device, the method further includes the following. After sending the second access message, the first device receives the access confirmation message. When the first ID in the access confirmation message is the same as the first ID of the first device, the first device determines that initial access is successful.

Optionally, when the first ID in the access confirmation message is different from the first ID of the first device, the first device can ignore or discard the access confirmation message.

That is, after receiving the second access message, the second device feeds back the access confirmation message containing the first ID in the second access message to the first device, such that the first device can confirm that collisions between the first device and other devices is solved, and then determine the success of initial access.

Optionally, the access confirmation message contains a second ID for the first device. Specifically, for the first device, when the access confirmation message contains the first ID of the first device, the access confirmation message further contains a second ID assigned to the first device by the target device. For the second device, after receiving the second access message, the access confirmation message sent by the second device further contains the second ID assigned to the first device by the second device. The second ID can be used in subsequent procedures, i.e., the second ID is used for distinguishing the first device from other devices in subsequent procedures.

Optionally, the UL message content to be sent by the first device may be carried in or encoded in the second access message. In some scenarios, such as reporting of monitoring/sensing information, inventory, etc., the UL message content to be sent by the first device has already been sent to the second device via the second access message, and there may be no subsequent procedure. In such cases, the response message may not contain the second ID, i.e., the second device does not need to assign the second ID to the first device.

In some embodiments, the second ID in the access confirmation message received by the first device is determined at least based on the first parameter of the target device. That is, for any second device, the second ID assigned to the first device in the access confirmation message is determined at least based on the first parameter of the second device.

Since the first parameter is encoded in the second ID, second IDs assigned by second devices with different first parameters are different. Therefore, in the above embodiment, the second ID can be unique in a local scope of a communication system, rather than among multiple first devices simultaneously accessing the target device, thereby avoiding an issue in message addressing between the first device and the target device after initial access.

To facilitate a clear understanding of the technical solutions, FIG. 14 illustrates a schematic diagram illustrating another application example of a method for signal processing according to embodiments of the disclosure. For example, the method is applicable in an IoT system, where a first device includes a tag, and second devices near the first device include readers. As illustrated in FIG. 14, the method for signal processing includes the following.

Step 1, after receiving a trigger message, the tag compares an RCC parameter in the trigger message with an RCC parameter of the best reader saved by the tag. When the tag determines that the RRC parameter in the trigger message is the same as the RCC parameter of the best reader, the tag randomly selects a preamble for sending a first access message. One sequence is modulated onto the preamble. The number of sequences is limited, e.g., 16 in total, and each sequence has a fixed sequence number. A reader can demodulate preambles with different sequences. If the reader receives preambles modulated with the same sequence from different tags, then the reader cannot distinguish between the tags, and may demodulate them as one preamble. A sequence number of the preamble (preamble index) selected by the tag also contains an RCC parameter.

Step 2, after receiving the preamble and comparing the RCC=001 contained in the preamble index, reader A (RCC=001) feeds back a response message containing the preamble index to the tag, indicating that the preamble with the index containing information RRC=001 has been correctly received and demodulated. Since RCC=001 contained in the preamble index is different from an RCC parameter of reader B (RCC=010), reader B ignores the message.

Step 3, after receiving the preamble index, the tag compares the preamble index with the preamble index just sent by the tag. If the two indexes are the same, then the tag sends a second access message that at least contains tag-id to the reader. Otherwise, the tag considers that initial access fails. The tag-id can be a random number generated by the tag.

Step 4, after receiving the second access message from the tag, reader A feeds back an access confirmation message containing the received tag-id and an ID Tag-RNTI (a second ID) assigned to the tag. When the tag receives the access confirmation message, if the tag finds that the received tag-id is the same as the tag-id sent by the tag, then the tag considers success of initial access, and then determines the received Tag-RNTI as an ID of the tag for subsequent procedures.

In other embodiments, the first access message contains a first preamble. The method for signal processing further includes the following. The second device receives the first access message. The second device sends a response message, where the response message contains a first parameter of the second device and a sequence number of the first preamble, to cause the first device to send a second access message.

Correspondingly, for the first device, the method for signal processing further includes the following. The first device receives a response message for the first access message, where the response message contains the first parameter of the second device that sends the access response message. The first device sends a second access message when the first parameter in the response message is the same as a first parameter of a target device and the response message contains the sequence number of the first preamble.

That is, when processing the first preamble, the first device does not need to refer to the first parameter of the target device. Each second device can respond to the first access message sent by the first device. However, first parameters in response messages sent by different second devices are different, and based on this, the first device can determine a response message sent by the target device, and send the second access message when the response message contains the sequence number of the first preamble. Through this embodiment, different second devices can also be differentiated, i.e., collisions between multiple second devices can be solved.

Based on the above embodiment, the second access message contains a first ID of the first device. The method for signal processing further includes the following. The second device receives the second access message. The second device sends an access confirmation message to the first device, where the access confirmation message contains the first ID, to cause the first device to determine success of initial access.

Correspondingly, for the first device, the method further includes the following. After sending the second access message, the first device receives the access confirmation message. When the first ID in the access confirmation message is the same as the first ID of the first device, the first device determines that initial access is successful.

Optionally, when the first ID in the access confirmation message is different from the first ID of the first device, the first device can ignore or discard the access confirmation message.

That is, after receiving the second access message, the second device feeds back the access confirmation message containing the first ID in the second access message to the first device, such that the first device can confirm that collisions between the first device and other devices are solved, and then determine the success of initial access.

Optionally, the access confirmation message contains a second ID for the first device. Specifically, for the first device, when the access confirmation message contains the first ID of the first device, the access confirmation message further contains a second ID assigned to the first device by the target device. For the second device, after receiving the second access message, the access confirmation message sent by the second device further contains the second ID assigned to the first device by the second device. The second ID can be used in subsequent procedures, i.e., the second ID is used for distinguishing the first device from other devices in subsequent procedures.

Optionally, the UL message content to be sent by the first device may be carried in or encoded in the second access message. In some scenarios, such as reporting of monitoring/sensing information, inventory, etc., the UL message content to be sent by the first device has already been sent to the second device via the second access message, and there may be no subsequent procedure. In such cases, the response message may not contain the second ID, i.e., the second device does not need to assign the second ID to the first device.

In some embodiments, the second ID in the access confirmation message received by the first device is determined at least based on the first parameter of the target device. That is, for any second device, the second ID assigned to the first device in the access confirmation message is determined at least based on the first parameter of the second device.

Since the first parameter is encoded in the second ID, second IDs assigned by second devices with different first parameters are different. Therefore, in the above embodiment, the second ID can be unique in a local scope of a communication system, rather than among multiple first devices simultaneously accessing the target device, thereby avoiding an issue in message addressing between the first device and the target device after initial access.

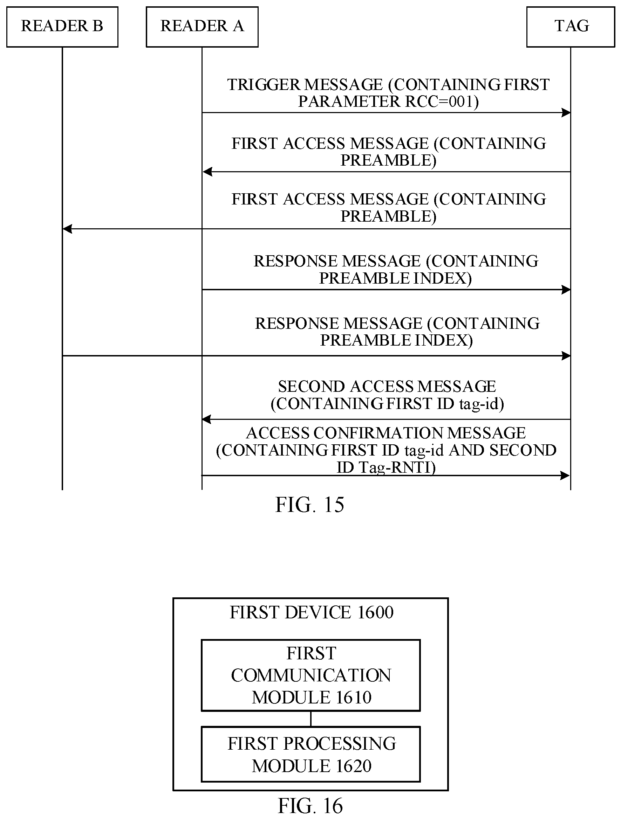

To facilitate a clear understanding of the technical solutions, FIG. 15 illustrates a schematic diagram illustrating another application example of a method for signal processing according to embodiments of the disclosure. For example, the method is applicable in an IoT system, where a first device includes a tag, and second devices near the first device include readers. As illustrated in FIG. 15, the method for signal processing includes the following.

Step 1, after receiving a trigger message, the tag compares an RCC in the trigger message with an RCC of the best reader saved by the tag. When the tag determines that the RRC in the trigger message is the same as the RCC of the best reader, the tag randomly selects a preamble for sending a first access message. One sequence is modulated onto the preamble. The number of sequences is limited, e.g., 16 in total, and each sequence has a fixed sequence number. A reader can demodulate preambles with different sequences. If the reader receives preambles modulated with the same sequence from different tags, then the reader cannot distinguish between the tags, and may demodulate them as one preamble.

Step 2, after receiving the preamble, each of reader A and reader B feeds back a response message containing the preamble index to the tag, indicating that the preamble corresponding to the preamble index has been correctly received and demodulated.

Step 3, after receiving the preamble index, the tag compares the preamble index with the preamble index just sent by the tag. If the two indexes are the same, then the tag sends a second access message at least containing tag-id to the reader. Otherwise, the tag considers that initial access fails. The tag-id can be a random number generated by the tag. In this step, although the tag almost simultaneously receives a response message from reader A and a response message from reader B, since reader A is the best reader, the tag demodulates the response message from reader A, while the response message from reader B becomes an interfering signal.

Step 4, after receiving the second access message from the tag, reader A feeds back an access confirmation message containing the received tag-id and an ID Tag-RNTI (a second ID) assigned to the tag. When the tag receives the access confirmation message, if the tag finds that the received tag-id is the same as the tag-id sent by the tag, then the tag considers success of initial access, and then determines the received Tag-RNTI as an ID of the tag for subsequent procedures.

In some embodiments, when the number of bits of the first ID is less than a first value, the second access message and/or the access confirmation message may contain the first parameter of the target device. The first value can be a preset value.

Specifically, if the bit length of the first ID is sufficient, then a first ID of each first device during initial access can always remain unique for all second devices around each first device. In the foregoing embodiment, another solution is provided, where the bit length of the first ID can be relatively small, such that first devices performing an initial access procedure can remain unique for a single second device. In other words, first devices performing an initial access procedure may have the same first ID for different second devices. Based on this, a first parameter can be added to the second access message and the access confirmation message, to distinguish all the first devices performing the initial access process.

It can be understood that, in a narrowband system, interference among IoT devices within the coverage of one network node is eliminated through an appropriate multiple access method. However, such a method cannot be applied to the initial access procedure. This is because, during initial access, the tag does not even know through which network node to access the network, making interference between network nodes inevitable. In the method for signal processing in embodiments of the disclosure, the strongest (closest) network node is determined by measuring signal strength of beacon signals or wake-up signals (e.g., messages for triggering inventory) sent by network nodes, and network nodes can be distinguished based on the first parameter. With this solution, UL and DL interference between readers during the initial access procedure can be substantially eliminated, with relatively low system bandwidth overhead and signalling overhead.

FIG. 16 is a schematic block diagram of a first device 1600 according to an embodiment of the disclosure. The first device 1600 may include a first communication module 1610 and a first processing module 1620. The first communication module 1610 is configured to receive a first signal, where the first signal contains a first parameter of a second device that sends the first signal. The first processing module 1620 is configured to determine a first parameter of a target device for initial access based on the first parameter in the first signal, where the first parameter of the target device is used for the first device to determine whether to respond to a message for triggering initial access received by the first device.

In an implementation, the first processing module 1620 is further configured to determine a first signal with the strongest signal strength among multiple received first signals, and determine a first parameter in the first signal with the strongest signal strength as the first parameter of the target device.

In an implementation, the first parameter is unique in a global scope or a local scope of a communication system.

In an implementation, the number of bits of the first parameter is related to the number of second devices in the global scope or the local scope of the communication system.

In an implementation, when the number of the second devices increases, the number of bits of the first parameter increases or remains unchanged.

In an implementation, the first signal includes a beacon signal periodically broadcast by the second device.

In an implementation, the first communication module 1610 is further configured to search for beacon signals within a first time window. The first processing module 1620 is further configured to, when finding out multiple beacon signals containing the same first parameter, determine, based on the multiple beacon signals containing the same first parameter, a broadcast period used by a second device corresponding to the same first parameter. The first communication module 1610 is further configured to receive a beacon signal from the second device based on the broadcast period.

In an implementation, the broadcast period is selected from a pre-configured set of periods, and a length of the first time window is greater than the maximum period in the set of periods.

In an implementation, the first communication module 1610 is further configured to send a second signal, where the second signal is used for triggering a second device that receives the second signal to send the first signal. The first communication module 1610 is further configured to receive the first signal sent by the second device.

In an implementation, the first communication module 1610 is further configured to receive a trigger message, where the trigger message is used for triggering initial access, and the trigger message contains a first parameter of a device that sends the trigger message. The first communication module 1610 is further configured to send a first access message when the first parameter in the trigger message is the same as the first parameter of the target device.

In an implementation, the trigger message includes a message for initiating an inventory.

In an implementation, the first access message contains the first parameter of the target device, and the first parameter of the target device indicates that the target device is to send a response message.

In an implementation, the first access message further contains a first ID of the first device, and the first access message is used for triggering the target device to send a response message containing the first ID. The first communication module 1610 is further configured to receive the response message. The first processing module 1620 is further configured to determine success of initial access when the first ID in the response message is the same as the first ID of the first device.

In an implementation, the response message contains a second ID assigned to the first device by the target device.

In an implementation, the first access message contains a first preamble, at least part of information in a sequence number of the first preamble is determined based on the first parameter of the target device, and the at least part of the information indicates that the target device is to send a response message. The first communication module 1610 is further configured to receive the response message, and send a second access message when a sequence number of a preamble contained in the response message is the same as the sequence number of the first preamble.

In an implementation, the first access message contains a first preamble. The first communication module 1610 is further configured to receive a response message for the first access message, where the response message contains a first parameter of a second device that sends the access response message. The first communication module 1610 is further configured to send a second access message when the first parameter in the response message is the same as the first parameter of the target device and the response message contains a sequence number of the first preamble.

In an implementation, the second access message contains a first ID of the first device. The first communication module 1610 is further configured to receive an access confirmation message after sending the second access message. The first processing module 1620 is further configured to determine success of initial access when a first ID in the access confirmation message is the same as the first ID of the first device.

In an implementation, the access confirmation message contains a second ID assigned to the first device by the target device.

In an implementation, the second ID is determined at least based on the first parameter of the target device.

In an implementation, when the number of bits of the first ID is less than a first value, the second access message and/or the access confirmation message contains the first parameter of the target device.

The first device 1600 in embodiments of the disclosure can implement corresponding functions of the terminal device in the foregoing method embodiments. For the procedure, function, implementation, and advantage corresponding to each module (sub-module, unit, or assembly, etc.) in the first device 1600, reference can be made to the corresponding illustrations in the foregoing method embodiments, which will not be described in detail again herein. It can be noted that, the functions of various modules (sub-modules, units, or assemblies, etc.) in the first device 1600 described in embodiments of the disclosure may be implemented by different modules (sub-modules, units, or assemblies, etc.), or may be implemented by the same module (sub-module, unit, or assembly, etc.).

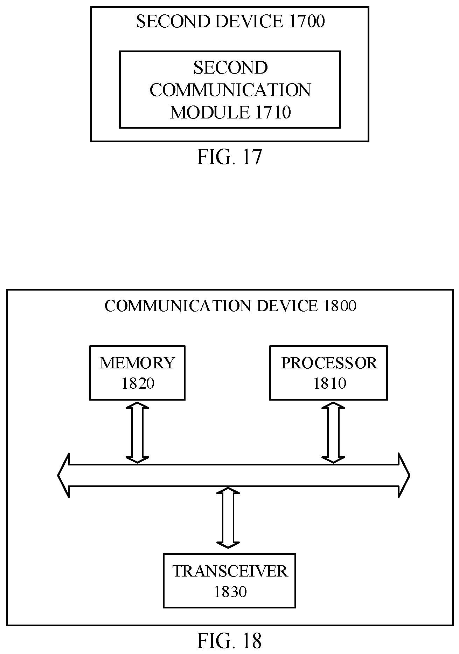

FIG. 17 is a schematic block diagram of a second device 1700 according to an embodiment of the disclosure. The second device 1700 may include a second communication module 1710. The second communication module 1710 is configured to send a first signal, where the first signal contains a first parameter of the second device, and the first signal is used for a first device to determine a first parameter of a target device for initial access, to determine whether to respond to a message for triggering initial access received by the first device.

In an implementation, the first parameter is unique in a global scope or a local scope of a communication system.

In an implementation, the number of bits of the first parameter is related to the number of second devices in the global scope or the local scope of the communication system.

In an implementation, when the number of the second devices increases, the number of bits of the first parameter increases or remains unchanged.

In an implementation, the second communication module 1710 is further configured to periodically broadcast a beacon signal.

In an implementation, a broadcast period of the beacon signal is selected from a pre-configured set of periods.

In an implementation, the second communication module 1710 is further configured to send the first signal to the first device in response to receiving a second signal sent by the first device.

In an implementation, the second communication module 1710 is further configured to send a trigger message, where the trigger message contains the first parameter of the second device, and the trigger message is used for triggering the first device to send a first access message when the first parameter in the trigger message is the same as the first parameter of the target device.

In an implementation, the trigger message includes a message for initiating an inventory.

In an implementation, the second communication module 1710 is further configured to receive the first access message, where the first access message contains the first parameter of the target device. The second communication module 1710 is further configured to send a response message to the first device when the first parameter in the first access message is the same as the first parameter of the second device.

In an implementation, the response message contains a first ID of the first device, the first ID is obtained based on the first access message, and the response message is used for the first device to determine success of initial access based on the first ID.

In an implementation, the response message contains a second ID assigned to the first device by the target device.

In an implementation, the second communication module 1710 is further configured to receive the first access message, where the first access message contains a first preamble. The second communication module 1710 is further configured to send a response message to the first device when at least part of information in a sequence number of the first preamble matches the first parameter of the second device, where the response message contains the sequence number of the first preamble, to cause the first device to send a second access message.

In an implementation, the second communication module 1710 is further configured to receive the first access message, where the first access message contains a first preamble. The second communication module 1710 is further configured to send a response message, where the response message contains the first parameter of the second device and a sequence number of the first preamble, to cause the first device to send a second access message.

In an implementation, the second communication module 1710 is further configured to receive the second access message, where the second access message contains a first ID of the first device. The second communication module 1710 is further configured to send an access confirmation message to the first device, where the access confirmation message contains the first ID, to cause the first device to determine success of initial access.

In an implementation, the access confirmation message contains a second ID assigned to the first device by the target device.

In an implementation, the second ID is determined at least based on the first parameter of the target device.

In an implementation, when the number of bits of the first ID is less than a first value, the second access message and/or the access confirmation message contains the first parameter of the target device.

The second device 1700 in embodiments of the disclosure can implement corresponding functions of the terminal device in the foregoing method embodiments. For the procedure, function, implementation, and advantage corresponding to each module (sub-module, unit, or assembly, etc.) in the second device 1700, reference can be made to the corresponding illustrations in the foregoing method embodiments, which will not be described in detail again herein. It can be noted that, the functions of various modules (sub-modules, units, or assemblies, etc.) in the second device 1700 described in embodiments of the disclosure may be implemented by different modules (sub-modules, units, or assemblies, etc.), or may be implemented by the same module (sub-module, unit, or assembly, etc.).

FIG. 18 is a schematic structural diagram of a communication device 1800 according to embodiments of the disclosure. The communication device 1800 includes a processor 1810, where the processor 1810 can invoke and execute a computer program stored in a memory, to cause the communication device 1800 to implement the method in embodiments of the disclosure.

In an implementation, the communication device 1800 may further include a memory 1820. The processor 1810 can invoke and execute a computer program stored in the memory 1820, to cause the communication device 1800 to implement the method in embodiments of the disclosure.

The memory 1820 may be a separate device independent of the processor 1810, or may be integrated into the processor 1810.

In an implementation, the communication device 1800 may further include a transceiver 1830. The processor 1810 may control the transceiver 1830 to communicate with other devices. Specifically, the processor 1810 may control the transceiver 1830 to send information or data to, or receive information or data from, other devices.

The transceiver 1830 may include a transmitter and a receiver. The transceiver 1830 may further include one or more antennas.

In an implementation, the communication device 1800 may be the first device in embodiments of the disclosure, and the communication device 1800 may implement corresponding operations implemented by the first device in various methods in embodiments of the disclosure, which will not be repeated herein for the sake of brevity.

In an implementation, the communication device 1800 may be the second device in embodiments of the disclosure, and the communication device 1800 may implement corresponding operations implemented by the second device in various methods in embodiments of the disclosure, which will not be repeated herein for the sake of brevity.

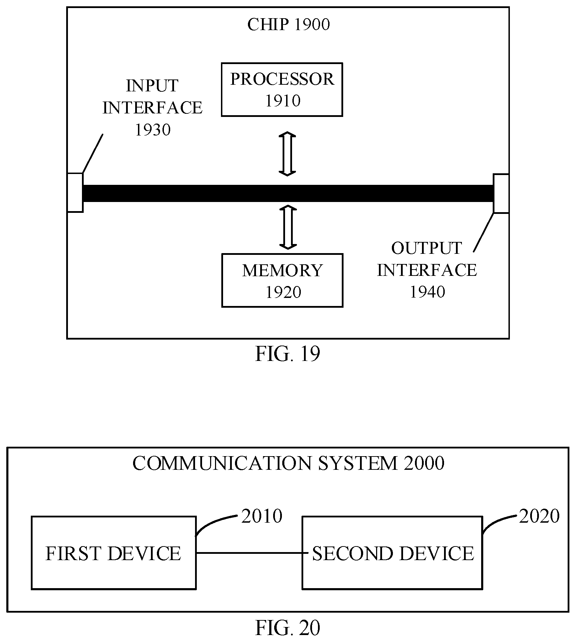

FIG. 19 is a schematic structural diagram of a chip according to embodiments of the disclosure. The chip 1900 includes a processor 1910, where the processor 1910 can invoke and execute a computer program stored in a memory to implement the method in embodiments of the disclosure.

In an implementation, the chip 1900 may further include a memory 1920. The processor 1910 can invoke and execute a computer program stored in the memory 1920 to implement the method performed by the first device and the second device in embodiments of the disclosure.

The memory 1920 may be a separate device independent of the processor 1910, or may be integrated into the processor 1910.

In an implementation, the chip 1900 may further include an input interface 1930. The processor 1910 may control the input interface 1930 to communicate with other devices or chips. Specifically, the processor 1910 can obtain information or data sent by other devices or chips.

In an implementation, the chip 1900 may further include an output interface 1940. The processor 1910 may control the output interface 1940 to communicate with other devices or chips. Specifically, the processor 1910 may output information or data to other devices or chips.

In an implementation, the chip is applicable to the first device in embodiments of the disclosure, and the chip may implement the corresponding operations performed by the first device in various methods in embodiments of the disclosure, which will not be repeated herein for the sake of brevity.

In an implementation, the chip is applicable to the second device in embodiments of the disclosure, and the chip may implement the corresponding operations performed by the second device in various methods in embodiments of the disclosure, which will not be repeated herein for the sake of brevity.

The chips applicable to the first device and the second device may be the same chip or different chips.

It may be understood that, the chip in embodiments of the disclosure may also be referred to as a system-level chip, a system chip, a chip system, or a system-on-chip (SOC).

The processor may be a general-purpose processor, a digital signal processor (DSP), a field programmable gate array (FPGA), an application-specific integrated circuit (ASIC), or other programmable logic devices, discrete gates or transistor logic devices, or discrete hardware components. The general-purpose processor may be a microprocessor, may be any conventional processor, etc.

The memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). In other words, the memory in embodiments of the disclosure is intended to include, but is not limited to, these and any other suitable types of memory.

FIG. 20 is a schematic block diagram of a communication system 2000 according to embodiments of the disclosure. The communication system 2000 includes a first device 2010 and a second device 2020.

The first device 2010 is configured to receive a first signal, where the first signal contains a first parameter of the second device 2020 that sends the first signal.

The first device 2010 is configured to determine a first parameter of a target device for initial access based on the first parameter in the first signal, where the first parameter of the target device is used for the first device 2010 to determine whether to respond to a message for triggering initial access received by the first device 2010.

The second device 2020 is configured to send a first signal, where the first signal contains a first parameter of the second device, and the first signal is used for the first device 2010 to determine a first parameter of a target device for initial access, to determine whether to respond to a message for triggering initial access received by the first device 2010.

The first device 2010 may be configured to implement the corresponding functions performed by the transmitting device in the method, and the second device 2020 may be configured to implement the corresponding functions performed by the receiving device in the method. For the sake of brevity, such details are not repeated herein.

All or some of the embodiments can be implemented through software, hardware, firmware, or any other combination thereof. When implemented by software, all or some of the embodiments can be implemented in the form of a computer program product. The computer program product includes one or more computer instructions. When the computer instructions are applied and executed on a computer, all or some of the operations or functions of embodiments of the disclosure are performed. The computer may be a general-purpose computer, a special-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device, such as a server, a data center, etc., that integrates one or more usable media. The usable medium may be a magnetic medium (such as a soft disk, a hard disk, or a magnetic tape), an optical medium (such as a digital video disc (DVD)), a semiconductor medium (such as a solid state disk (SSD)), etc.

It can be understood that, in various embodiments of the disclosure, the magnitude of a sequence number of each of the foregoing processes does not imply an execution order, and the execution order between the processes can be determined according to function and internal logic thereof, which shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for signal processing, comprising:
receiving, by a first device, a first signal, wherein the first signal contains a first parameter of a second device that sends the first signal; and
determining, by the first device, a first parameter of a target device for initial access based on the first parameter in the first signal, wherein the first parameter of the target device is used for the first device to determine whether to respond to a message for triggering initial access received by the first device.

2. The method of claim 1, wherein determining, by the first device, the first parameter of the target device for initial access based on the first parameter in the first signal comprises:
determining, by the first device, a first signal with strongest signal strength among a plurality of received first signals; and
determining, by the first device, a first parameter in the first signal with the strongest signal strength as the first parameter of the target device.

3. The method of claim 1 or 2, wherein the first parameter is unique in a global scope or a local scope of a communication system.

4. The method of any one of claims 1 to 3, wherein a number of bits of the first parameter is related to a number of second devices in a global scope or a local scope of a communication system.

5. The method of claim 4, wherein in response to the number of the second devices increasing, the number of bits of the first parameter increases or remains unchanged.

6. The method of any one of claims 1 to 5, wherein the first signal comprises a beacon signal periodically broadcast by the second device.

7. The method of claim 6, wherein receiving, by the first device, the first signal comprises:
searching for, by the first device, beacon signals within a first time window; and
in response to the first device finding out a plurality of beacon signals containing a same first parameter, determining, by the first device, based on the plurality of beacon signals containing the same first parameter, a broadcast period used by a second device corresponding to the same first parameter, and receiving, by the first device, a beacon signal from the second device based on the broadcast period.

8. The method of claim 7, wherein the broadcast period is selected from a pre-configured set of periods, and a length of the first time window is greater than a maximum period in the set of periods.

9. The method of any one of claims 1 to 5, wherein receiving, by the first device, the at least one first signal comprises:
sending, by the first device, a second signal, wherein the second signal is used for triggering a second device that receives the second signal to send the first signal; and
receiving, by the first device, the first signal sent by the second device.

10. The method of any one of claims 1 to 9, further comprising:
receiving, by the first device, a trigger message, wherein the trigger message is used for triggering initial access, and the trigger message contains a first parameter of a device that sends the trigger message; and
sending, by the first device, a first access message in response to the first parameter in the trigger message being the same as the first parameter of the target device.

11. The method of claim 10, wherein the trigger message comprises a message for initiating an inventory.

12. The method of claim 10 or 11, wherein the first access message contains the first parameter of the target device, and the first parameter of the target device indicates that the target device is to send a response message.

13. The method of claim 12, wherein
the first access message further contains a first identifier (ID) of the first device, and the first access message is used for triggering the target device to send a response message containing the first ID; and
the method further comprises:
receiving, by the first device, the response message, and determining, by the first device, success of initial access in response to the first ID in the response message being the same as the first ID of the first device.

14. The method of claim 13, wherein the response message contains a second ID assigned to the first device by the target device.

15. The method of claim 10 or 11, wherein
the first access message contains a first preamble, at least part of information in a sequence number of the first preamble is determined based on the first parameter of the target device, and the at least part of the information indicates that the target device is to send a response message; and
the method further comprises:
receiving, by the first device, the response message, and sending, by the first device, a second access message in response to a sequence number of a preamble contained in the response message being the same as the sequence number of the first preamble.

16. The method of claim 10 or 11, wherein
the first access message contains a first preamble; and
the method further comprises:
receiving, by the first device, a response message for the first access message, wherein the response message contains a first parameter of a second device that sends the access response message; and
sending, by the first device, a second access message in response to the first parameter in the response message being the same as the first parameter of the target device and the response message containing a sequence number of the first preamble.

17. The method of claim 15 or 16, wherein
the second access message contains a first ID of the first device; and
the method further comprises:
receiving, by the first device, an access confirmation message after sending the second access message, and determining, by the first device, success of initial access in response to a first ID in the access confirmation message being the same as the first ID of the first device.

18. The method of claim 17, wherein the access confirmation message contains a second ID assigned to the first device by the target device.

19. The method of claim 14 or 18, wherein the second ID is determined at least based on the first parameter of the target device.

20. The method of claim 17 or 18, wherein in response to a number of bits of the first ID being less than a first value, the second access message and/or the access confirmation message contains the first parameter of the target device.

21. A method for signal processing, comprising:
sending, by a second device, a first signal, wherein the first signal contains a first parameter of the second device, and the first signal is used for a first device to determine a first parameter of a target device for initial access, to determine whether to respond to a message for triggering initial access received by the first device.

22. The method of claim 21, wherein the first parameter is unique in a global scope or a local scope of a communication system.

23. The method of claim 21 or 22, wherein a number of bits of the first parameter is related to a number of second devices in a global scope or a local scope of a communication system.

24. The method of claim 23, wherein in response to the number of the second devices increasing, the number of bits of the first parameter increases or remains unchanged.

25. The method of any one of claims 21 to 24, wherein sending, by the second device, the first signal to the first device comprises:
broadcasting periodically, by the second device, a beacon signal.

26. The method of claim 25, wherein a broadcast period of the beacon signal is selected from a pre-configured set of periods.

27. The method of any one of claims 21 to 24, wherein sending, by the second device, the first signal to the first device comprises:
sending, by the second device, the first signal to the first device in response to receiving a second signal sent by the first device.

28. The method of any one of claims 21 to 27, further comprising:
sending, by the second device, a trigger message, wherein the trigger message contains the first parameter of the second device, and the trigger message is used for triggering the first device to send a first access message in response to the first parameter in the trigger message being the same as the first parameter of the target device.

29. The method of claim 28, wherein the trigger message comprises a message for initiating an inventory.

30. The method of claim 28 or 29, further comprising:
receiving, by the second device, the first access message, wherein the first access message contains the first parameter of the target device; and
sending, by the second device, a response message to the first device in response to the first parameter in the first access message being the same as the first parameter of the second device.

31. The method of claim 30, wherein the response message contains a first identifier (ID) of the first device, the first ID is obtained based on the first access message, and the response message is used for the first device to determine success of initial access based on the first ID.

32. The method of claim 31, wherein the response message contains a second ID assigned to the first device by the target device.

33. The method of claim 28 or 29, further comprising:
receiving, by the second device, the first access message, wherein the first access message contains a first preamble; and
sending, by the second device, a response message to the first device in response to at least part of information in a sequence number of the first preamble matching the first parameter of the second device, wherein the response message contains the sequence number of the first preamble, to cause the first device to send a second access message.

34. The method of claim 28 or 29, further comprising:
receiving, by the second device, the first access message, wherein the first access message contains a first preamble; and
sending, by the second device, a response message, wherein the response message contains the first parameter of the second device and a sequence number of the first preamble, to cause the first device to send a second access message.

35. The method of claim 33 or 34, further comprising:
receiving, by the second device, the second access message, wherein the second access message contains a first ID of the first device; and
sending, by the second device, an access confirmation message to the first device, wherein the access confirmation message contains the first ID, to cause the first device to determine success of initial access.

36. The method of claim 35, wherein the access confirmation message contains a second ID assigned to the first device by the target device.

37. The method of claim 32 or 36, wherein the second ID is determined at least based on the first parameter of the target device.

38. The method of claim 35 or 36, wherein in response to a number of bits of the first ID being less than a first value, the second access message and/or the access confirmation message contains the first parameter of the target device.

39. A first device, comprising:
a first communication module configured to receive a first signal, wherein the first signal contains a first parameter of a second device that sends the first signal; and
a first processing module configured to determine a first parameter of a target device for initial access based on the first parameter in the first signal, wherein the first parameter of the target device is used for the first device to determine whether to respond to a message for triggering initial access received by the first device.

40. The first device of claim 39, wherein the first processing module is further configured to:
determine a first signal with strongest signal strength among a plurality of received first signals; and
determine a first parameter in the first signal with the strongest signal strength as the first parameter of the target device.

41. The first device of claim 39 or 40, wherein the first parameter is unique in a global scope or a local scope of a communication system.

42. The first device of any one of claims 39 to 41, wherein a number of bits of the first parameter is related to a number of second devices in a global scope or a local scope of a communication system.

43. The first device of claim 42, wherein in response to the number of the second devices increasing, the number of bits of the first parameter increases or remains unchanged.

44. The first device of any one of claims 39 to 43, wherein the first signal comprises a beacon signal periodically broadcast by the second device.

45. The first device of claim 44, wherein
the first communication module is further configured to search for beacon signals within a first time window;
the first processing module is further configured to, in response to finding out a plurality of beacon signals containing a same first parameter, determine, based on the plurality of beacon signals containing the same first parameter, a broadcast period used by a second device corresponding to the same first parameter; and
the first communication module is further configured to receive a beacon signal from the second device based on the broadcast period.

46. The first device of claim 45, wherein the broadcast period is selected from a pre-configured set of periods, and a length of the first time window is greater than a maximum period in the set of periods.

47. The first device of any one of claims 39 to 43, wherein the first communication module is further configured to:
send a second signal, wherein the second signal is used for triggering a second device that receives the second signal to send the first signal; and
receive the first signal sent by the second device.

48. The first device of any one of claims 39 to 47, wherein the first communication module is further configured to:
receive a trigger message, wherein the trigger message is used for triggering initial access, and the trigger message contains a first parameter of a device that sends the trigger message; and
send a first access message in response to the first parameter in the trigger message being the same as the first parameter of the target device.

49. The first device of claim 48, wherein the trigger message comprises a message for initiating an inventory.

50. The first device of claim 48 or 49, wherein the first access message contains the first parameter of the target device, and the first parameter of the target device indicates that the target device is to send a response message.

51. The first device of claim 50, wherein
the first access message further contains a first identifier (ID) of the first device, and the first access message is used for triggering the target device to send a response message containing the first ID;
the first communication module is further configured to receive the response message; and
the first processing module is further configured to determine success of initial access in response to the first ID in the response message being the same as the first ID of the first device.

52. The first device of claim 51, wherein the response message contains a second ID assigned to the first device by the target device.

53. The first device of claim 48 or 49, wherein
the first access message contains a first preamble, at least part of information in a sequence number of the first preamble is determined based on the first parameter of the target device, and the at least part of the information indicates that the target device is to send a response message; and
the first communication module is further configured to:
receive the response message, and send a second access message in response to a sequence number of a preamble contained in the response message being the same as the sequence number of the first preamble.

54. The first device of claim 48 or 49, wherein
the first access message contains a first preamble; and
the first communication module is further configured to:
receive a response message for the first access message, wherein the response message contains a first parameter of a second device that sends the access response message; and
send a second access message in response to the first parameter in the response message being the same as the first parameter of the target device and the response message containing a sequence number of the first preamble.

55. The first device of claim 53 or 54, wherein
the second access message contains a first ID of the first device;
the first communication module is further configured to receive an access confirmation message after sending the second access message; and
the first processing module is further configured to determine success of initial access in response to a first ID in the access confirmation message being the same as the first ID of the first device.

56. The first device of claim 55, wherein the access confirmation message contains a second ID assigned to the first device by the target device.

57. The first device of claim 52 or 56, wherein the second ID is determined at least based on the first parameter of the target device.

58. The first device of claim 55 or 56, wherein in response to a number of bits of the first ID being less than a first value, the second access message and/or the access confirmation message contains the first parameter of the target device.

59. A second device, comprising:
a second communication module configured to send a first signal, wherein the first signal contains a first parameter of the second device, and the first signal is used for a first device to determine a first parameter of a target device for initial access, to determine whether to respond to a message for triggering initial access received by the first device.

60. The second device of claim 59, wherein the first parameter is unique in a global scope or a local scope of a communication system.

61. The second device of claim 59 or 60, wherein a number of bits of the first parameter is related to a number of second devices in a global scope or a local scope of a communication system.

62. The second device of claim 61, wherein in response to the number of the second devices increasing, the number of bits of the first parameter increases or remains unchanged.

63. The second device of any one of claims 59 to 62, wherein the second communication module is further configured to:
periodically broadcast a beacon signal.

64. The second device of claim 63, wherein a broadcast period of the beacon signal is selected from a pre-configured set of periods.

65. The second device of any one of claims 59 to 62, wherein the second communication module is further configured to:
send the first signal to the first device in response to receiving a second signal sent by the first device.

66. The second device of any one of claims 59 to 65, wherein the second communication module is further configured to:
send a trigger message, wherein the trigger message contains the first parameter of the second device, and the trigger message is used for triggering the first device to send a first access message in response to the first parameter in the trigger message being the same as the first parameter of the target device.

67. The second device of claim 66, wherein the trigger message comprises a message for initiating an inventory.

68. The second device of claim 66 or 67, wherein the second communication module is further configured to:
receive the first access message, wherein the first access message contains the first parameter of the target device; and
send a response message to the first device in response to the first parameter in the first access message being the same as the first parameter of the second device.

69. The second device of claim 68, wherein the response message contains a first identifier (ID) of the first device, the first ID is obtained based on the first access message, and the response message is used for the first device to determine success of initial access based on the first ID.

70. The second device of claim 69, wherein the response message contains a second ID assigned to the first device by the target device.

71. The second device of claim 66 or 67, wherein the second communication module is further configured to:
receive the first access message, wherein the first access message contains a first preamble; and
send a response message to the first device in response to at least part of information in a sequence number of the first preamble matching the first parameter of the second device, wherein the response message contains the sequence number of the first preamble, to cause the first device to send a second access message.

72. The second device of claim 66 or 67, wherein the second communication module is further configured to:
receive the first access message, wherein the first access message contains a first preamble; and
send a response message, wherein the response message contains the first parameter of the second device and a sequence number of the first preamble, to cause the first device to send a second access message.

73. The second device of claim 71 or 72, wherein the second communication module is further configured to:
receive the second access message, wherein the second access message contains a first ID of the first device; and
send an access confirmation message to the first device, wherein the access confirmation message contains the first ID, to cause the first device to determine success of initial access.

74. The second device of claim 73, wherein the access confirmation message contains a second ID assigned to the first device by the target device.

75. The second device of claim 70 or 74, wherein the second ID is determined at least based on the first parameter of the target device.

76. The second device of claim 73 or 74, wherein in response to a number of bits of the first ID being less than a first value, the second access message and/or the access confirmation message contains the first parameter of the target device.

77. A first device, comprising:
a memory configured to store a computer program;
a transceiver configured to communicate with other devices; and
a processor configured to invoke and execute the computer program stored in the memory, to cause the first device to perform the method of any one of claims 1 to 20.

78. A second device, comprising:
a memory configured to store a computer program;
a transceiver configured to communicate with other devices; and
a processor configured to invoke and execute the computer program stored in the memory, to cause the second device to perform the method of any one of claims 21 to 38.

79. A chip, comprising:
a processor configured to invoke and execute a computer program stored in a memory, to cause a device equipped with the chip to perform the method of any one of claims 1 to 20.

80. A chip, comprising:
a processor configured to invoke and execute a computer program stored in a memory, to cause a device equipped with the chip to perform the method of any one of claims 21 to 38.

81. A computer-readable storage medium configured to store a computer program which, when executed by a device, causes the device to perform the method of any one of claims 1 to 20.

82. A computer-readable storage medium configured to store a computer program which, when executed by a device, causes the device to perform the method of any one of claims 21 to 38.

83. A computer program product comprising computer program instructions that are operable with a computer to perform the method of any one of claims 1 to 20.

84. A computer program product comprising computer program instructions that are operable with a computer to perform the method of any one of claims 21 to 38.

85. A computer program being operable with a computer to perform the method of any one of claims 1 to 20.

86. A computer program being operable with a computer to perform the method of any one of claims 21 to 38.

87. A communication system, comprising:
a first device configured to perform the method of any one of claims 1 to 20; and
a second device configured to perform the method of any one of claims 21 to 38.
